# EUROPEAN PATENT SPECIFICATION

(11) **EP 2 211 482 B1**
(45) Date of publication and mention of the grant of the patent: **13.03.2013**
(21) Application number: 07855826.9
(22) Date of filing: 27.12.2007
(51) Int. Cl.: H04W 88/18, H04L 29/06

(54) **A METHOD FOR NEGOTIATING CODEC BETWEEN A WIRELESS NETWORK AND A CORE NETWORK IN A MOBILE**
VERFAHREN ZUR CODEC-AUSHANDLUNG ZWISCHEN EINEM DRAHTLOSEN NETZ UND EINEM KERNNETZ IN EINER MOBILEN EINRICHTUNG
PROCÉDÉ DE NÉGOCIATION DE CODEC ENTRE UN RÉSEAU SANS FIL ET UN RÉSEAU CENTRAL DANS UN SYSTÈME DE TÉLÉCOMMUNICATION MOBILE

(30) Priority: 09.10.2007 CN 200710140694
(43) Date of publication of application: 28.07.2010
(73) Proprietor: ZTE Corporation, Shenzhen, Guangdong 518057 (CN)
(72) Inventor: WANG, Xinhui, Guangdong 518057 (CN)
(74) Representative: Pichat, Thierry
(86) International application number: PCT/CN2007/003825
(87) International publication number: WO 2009/046594

(56) References cited:
- WO-A1-2007/098783
- CN-A- 1 784 030
- CN-A- 1 870 592
- CN-A- 1 918 883
- US-A1- 2005 201 336
- US-A1- 2005 201 336
- US-A1- 2006 114 868

## Description

### Technical Field

The present invention relates to the field of mobile communication, and in particular, to a method for negotiating codec between a wireless network and a core network in a mobile communication system.

### Background of the Invention

In Global System for Mobile Communications (GSM), currently, the A interface between a Mobile Switching Centre (MSC) and a Base Station Controller (BSC) is based on Time Division Multiple (TDM) bearer, and what is transmitted thereon is 64Kbps PCM voice coding. The interface between a Mobile Station (MS) and a Base Station (BS) is an Um interface, and what is transmitted thereon is compressed voice coding. The interface between BS and BSC is an Abis interface which is also based on TDM bearer, and what is transmitted thereon is still compressed voice coding as on the Um interface. BSC has Transcoder and Rate Adaption Unit (TRAU) function, and the unit for implementing such function is a Transcoder (TC), which implements conversion between compressed voice coding of an Abis interface and 64 Kbps PCM voice coding of an A interface.

For example, the document "WIDEBAND CODEC NEGOTIATION' (WO 2007/098783 A1) discloses methods for codec handling which involving providing a supported codec list of a Call Control Server.

After 3GPP release 4, separation of control from bearer is achieved among core network NEs (Network Elements), thus forming two new NEs: a Mobile Switching Centre Server (MSCServer) and a Media Gateway (MGW), wherein the latter itself has TRAU function. The interface between the MSCServer and the MGW is a Mc interface, through which the MSCServer implements control on the MGW. With the incorporation of IP technology into communication networks, when A interface is based on IP bearer (A Over IP, AoIP in short), the network architecture of a traditional GSM will change accordingly, wherein one change is to cancel the TRAU function of the BSC, i.e., to cancel TC in the BSC NE, the A interface still transmits compressed voice coding as the Abis interface does, and the voice codec is performed using TRAU function of MGW. This kind of architecture can greatly reduce requirements on transmission resources of A interface, and is preferable to reduction of operating cost for operators. Meanwhile, this kind of architecture can decrease the times of voice codec in the previous GSM network, improve voice quality, and make it easy to achieve voice Transcoder Free Operation (TrFO).

Despite all the above advantages brought about by this architecture, a problem also arises: since AoIP is incorporated, TC function of BSC is cancelled and TC function of MGW is used in the process of conversation, thus a method is required to enable a core network and a wireless network to negotiate on voice codec function before a call is established so as to avoid as much as possible the situation that the core network assigns a voice version which the wireless network is unable to provide. If a core network assigns a voice version which the wireless network is unable to provide, MGW has to insert TC to perform voice adaptation when processing a call, in which case TC resources will be wasted, and also establishment of TrFO in the calling will fail.

### Summary of the Invention

The technical problem to be solved in the present invention is to provide a method for negotiating coding/decoding (CODEC) between a wireless network and a core network in a mobile communication system so as to avoid the problem that a core network may assign a voice version which the wireless network is unable to provide.

In order to solve the above problem, the present invention provides a method for negotiating codec between a wireless network and a core network in a mobile communication system, comprising: before a call is established, a BSC informing a MSCServer of the voice codec capability of a wireless cell in which a call is originated; the MSCServer analyzing and comparing the received voice codec capability of the wireless cell with the voice codec resources of a MGW to obtain common voice codec types supported by both of the wireless cell and the MGW; and transmitting the common voice codec types to the BSC.

Furthermore, the method comprises the following steps of
a, after receiving a SABM (Set Asynchronous Balanced Mode) frame containing content of a Layer-3 signaling sent by a mobile terminal, a base station transmitting the SABM frame to the BSC in an Establishment Indication signaling;
b, after receiving the Establishment Indication signaling, the BSC analyzing the Establishment Indication signaling to compose a complete Layer-3 message, and after filling an extension information element of the complete Layer-3 message with a voice codec capability list of a current wireless cell in the BSC, transmitting the extended complete Layer-3 message to the MSCServer;
c, after receiving the extended complete Layer-3 information, the MSCServer obtaining the voice codec capability list of the current wireless cell by analyzing the complete Layer-3 message, obtaining common voice codec types that are supported by both of the current wireless cell and the MGW by analyzing the complete Layer-3 message in combination with voice codec resources of the MGW, and transmitting the common voice codec types to the BSC.

Furthermore, before executing said step a, the mobile terminal transmits the SABM frame containing the content of a Layer-3 signaling to the base station through a Um interface.

Furthermore, the mobile terminal transmitting the SABM frame to the base station includes the following cases:
in the case that the mobile terminal serves as a calling party, the mobile terminal originates a call, and transmits a SABM frame containing the content of the Layer-3 signaling to the base station through the Um interface;
in the case that the mobile terminal serves as a called party, after receiving paging information serving as the called party, the mobile terminal transmits a SABM frame containing the content of the Layer-3 signaling to the base station through the Um interface.

Furthermore, in said step a, the base station transmits the Establishment Indication signaling to the BSC in signaling time slots via an Abis interface.

Furthermore, said step b comprises:
after receiving the Establishment Indication signaling, the BSC analyzing the Establishment Indication signaling to compose complete Layer-3 message, and filling the extension information element part of the complete Layer-3 message with voice codec capability list of the current wireless cell in the BSC based on wireless cell information in the signaling, and then transmitting the extended complete Layer-3 message to the MSCServer.

Furthermore, in said step b,
the extension information element part of the complete Layer-3 message is filled with the voice codec capability list of the cell in the BSC, wherein the extension information element part comprises BSS Preferred Codec List, and the BSS Preferred Codec List represents voice codec capability of a base station subsystem.

Furthermore, the BSS Preferred Codec List comprises a cell identifier, supported voice codec numbers and supported voice codecs; wherein the BSC performs sequencing of voice codec capabilities according to state of its own wireless resources, and a voice codec with the highest priority is ranked at the top.

Furthermore, in said step c,
after receiving the extended complete Layer-3 message, the MSCServer obtains the voice codec capability list of the current wireless cell by analyzing the BSS Preferred Codec List in the complete Layer-3 message; the MSCServer analyzes the voice codec capability list of the current wireless cell in combination with voice codec resources of a Transcoder of the MGW to obtain common voice codec types that are supported by both of the current wireless cell and the MGW, and then transmits the common voice codec types to the BSC.

Furthermore, the MSCServer transmits an Assignment Request message to the BSC through an A interface, wherein the Assignment Request message comprises common voice codec types that are supported by both of the current wireless cell and the MGW.

Compared with the prior art, the present invention enables a mobile switching center server to know the voice codec capability of a wireless network before a call is established, thus avoiding the problem that a core network may assign a voice version which cannot be provided by the wireless network through decision algorithm; the present does not demand to change the existing Um interface, and thus does not have any impact on the mobile terminal of the existing network; the present invention does not demand to change the existing Abis interface, and thus does not have any impact on the base station of the existing network, and avoid spending in updating devices.

### Brief Description of Drawings

FIG. 1 is a flow chart according to one embodiment of the present invention;
FIG. 2 illustrates the structure of the network in a GSM communication system in the case that A interface is based on IP bearer according to one embodiment of the present invention;
FIG. 3 illustrates the method for implementing negotiation on voice codec between a wireless network and a core network when a mobile terminal serves as a calling part according to one embodiment of the present invention;
FIG. 4 illustrates the method for implementing negotiation on voice codec between a wireless network and a core network when a mobile terminal serves as a called part according to one embodiment of the present invention.

### Preferred Embodiments of the Invention

The system of the present invention comprises a mobile terminal, a base station, a base station controller (BSC), a mobile switching center server (MSCServer), a media gateway (MGW), and a Um interface between the mobile terminal and the base station, an Abis interface between the base station and the base station controller, an A interface between the base station controller and the mobile switching center server, and a Mc interface between the mobile switching center server and the media gateway.

The main idea of the present invention is as follows: before a call is established, the BSC informs via an extended complete layser-3 message the MSCServer of the voice codec capability of a wireless cell which is to call through the A interface; the MSCServer analyzes and compares the received voice codec capability of the wireless cell with the voice codec resources of the MGW through a control signaling of the Mc interface to obtain common voice codec types that are supported by both of the wireless cell and the MGW, so as to avoid as much as possible the situation that a core network assigns a voice version which the wireless network is unable to provide.

The present invention will be further described below with reference to accompany drawings and specific embodiments.

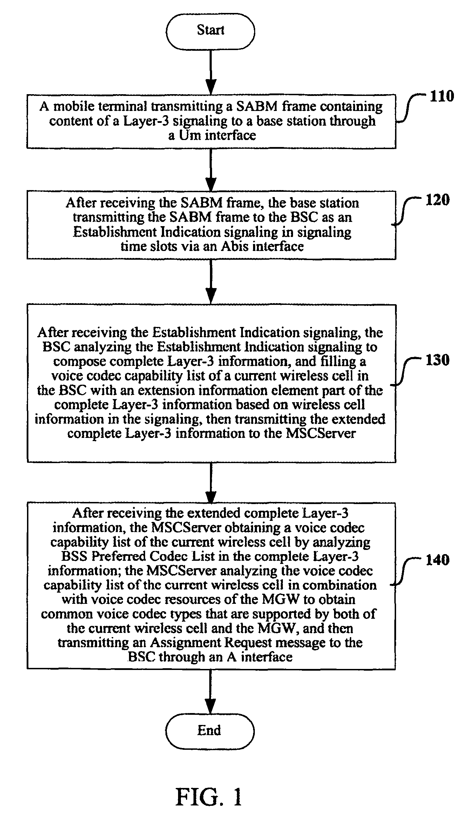

As shown in FIG. 1, a method for negotiating codec between a wireless network and a core network in a mobile communication system comprises the following steps of:
Step 110: a mobile terminal transmitting a SABM (Set Asynchronous Balanced Mode) frame containing content of a Layer-3 signaling to a base station through a Um interface;
in the case that the mobile terminal serves as a calling party, the mobile terminal originates a call, and transmits a SABM frame containing content of a Layer-3 signaling to a base station through a Um interface;
in the case that the mobile terminal serves as a called party, the mobile terminal transmits a SABM frame containing content of a Layer-3 signaling to a base station through a Um interface after receiving paging information as a called party.
Step 120, after receiving the SABM frame, the base station transmitting the SABM frame to the BSC in an Establishment Indication signaling in signaling time slots via an Abis interface;
Step 130, after receiving the Establishment Indication signaling, the BSC analyzing the Establishment Indication signaling to compose complete Layer-3 message, and filling a voice codec capability list of a current wireless cell in the BSC with an extension information element part of the complete Layer-3 message based on wireless cell information in the signaling, then transmitting the extended complete Layer-3 message to the MSCServer;

An extension information element part of the complete Layer-3 message is filled with the voice codec capability list of the cell in the BSC, wherein the extension information element part comprises a BSS Preferred Codec List information element, which refers to voice codec capability of a BSS (Base Station Subsystem) wireless system.

The BSS Preferred Codec List information element comprises a cell identifier, supported voice codec numbers and several supported voice codecs (such as voice codec 1, voice codec 2, ......voice codec n, n is a positive integer); wherein the BSC performs sequencing of voice codec capabilities according to state of its own wireless resources, the voice codec ranking first is the one with the highest priority, and the voice codec ranking second is the one with less high priority, and so forth.

Step 140, after receiving the extended complete Layer-3 message, the MSCServer obtaining a voice codec capability list of the current wireless cell by analyzing BSS Preferred Codec List in the complete Layer-3 message; the MSCServer analyzing the voice codec capability list of the current wireless cell in combination with voice codec resources of TC in the MGW to obtain common voice codec types that are supported by both of the current wireless cell and the MGW, and then transmitting an Assignment Request message to the BSC through an A interface.

The Assignment Request message comprises common voice codec types that are supported by both of the current wireless cell and the MGW.

The present invention will be further described below with reference to specific application examples.

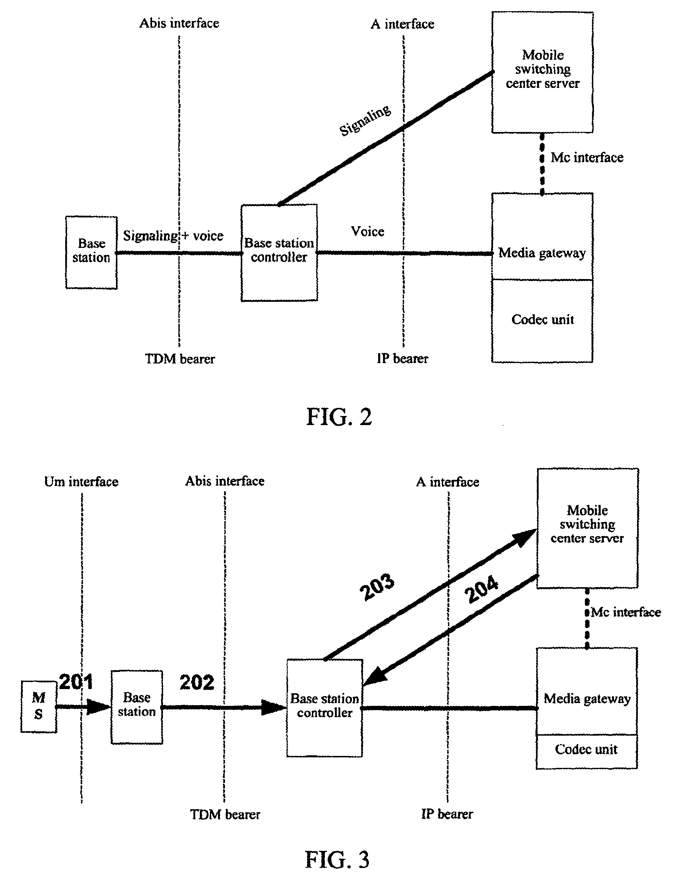

The structure of the network in a GSM communication system in the case that A interface is based on IP bearer is as shown in FIG. 2, wherein TC is cancelled from the BSC, and TC in the MGW is used to implement voice rate adaptation function after a call is established.

The specific embodiments will be described below in two cases:
The method for implementing negotiation on voice codec between a wireless network and a core network when a mobile terminal serves as a calling part is as shown in FIG. 3:
   Step 201, a mobile terminal originating a call, and transmitting a SABM frame containing content of a Layer-3 signaling to a base station through a Um interface;
   Step 202, the base station transmitting the SABM frame received in step 201 to a BSC as an Establishment Indication signaling in signaling time slots via an Abis interface;
   Step 203, the BSC analyzing the Establishment Indication signaling received in step 202 to compose complete Layer-3 message containing CM Service Request (Connection Management Service Request), and filling a voice codec capability list of the cell in the BSC with an extension information element part of the complete Layer-3 message based on wireless cell information in the signaling, then transmitting the extended complete Layer-3 message to the MSCServer;

An extension information element part of the complete Layer-3 message is filled with the voice codec capability of the cell in the BSC. The information element's name is BSS preferred codec list which is shown in the last line in Table 1, and the information element is used to represent voice codec capability of a BSS wireless system; the method for representing the capability is as shown in Table 2, including Preferred codec list information element identifier, supported voice codec numbers, voice codec 1, voice codec 2, voice codec n; the BSC performs sequencing of voice codec capabilities according to state of its own wireless resources, the voice codec ranking first is the one with the highest priority, and the voice codec ranking second is the one with less high priority, and so forth.

**Table 1: table representing extended complete Layer-3 message information element**

| Information element | Direction | Type | Length |
|---|---|---|---|
| Message type | BSS-MSC | M | 1 |
| Cell identifier | BSS-MSC | M | 3-10 |
| Layer 3 information | BSS-MSC | M | 3-n |
| Chosen channel | BSS-MSC | O (note 1) | 2 |
| LSA identifier list | BSS-MSC | O (note 2) | 3+3n |
| PADU | BSS-MSC | O (note 3) | 3-n |
| BSS preferred codec list | BSS-MSC | M | 3-n |

**Table 2: Table representing specific definition of the extended complete Layer-3 message information element**

| 8 | 7 | 6 | 5 | 4 | 3 | 2 | 1 | |
|---|---|---|---|---|---|---|---|---|
| Preferred codec list element identifier | | | | | | | | octet 1 |
| Codec numbers | | | | | | | | octet 2 |
| Preferred codec 1 | | | | | | | | octet 3 |
| Preferred codec 2 | | | | | | | | octet 4 |
| ... | | | | | | | | octet ... |
| Preferred codec n | | | | | | | | octet n |

Step 204, after receiving the extended complete Layer-3 message sent in step 203, the MSCServer obtaining a voice codec capability list of the current wireless cell by analyzing BSS Preferred Codec List in the message; the MSCServer analyzing the list in combination with the state of voice codec resources of TC of the MGW to obtain common voice codec types that are supported by both of the current wireless cell and the TC of the MGW, and then transmitting voice codec of those types as assigned types to the BSC in the subsequent Assignment Request message through the A interface, thus achieving the purpose of avoiding as much as possible the case that a core network assigns a voice version which the wireless network is unable to provide.

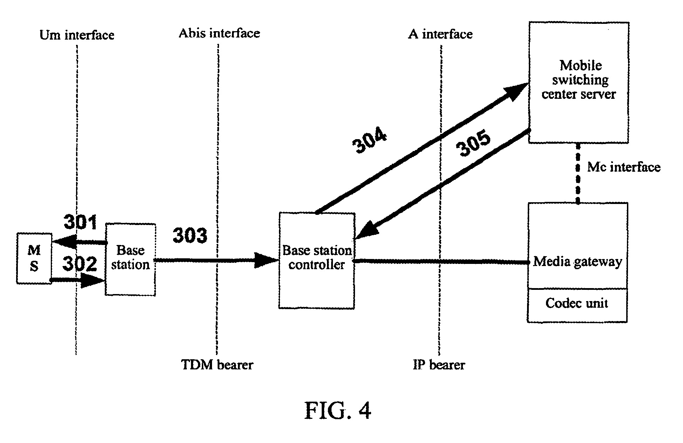

The method for implementing negotiation on voice codec between a wireless network and a core network when a mobile terminal serves as a called part is as shown in FIG. 4:
Step 301, a mobile terminal serving as a called party receiving a paging message;
Step 302, after receiving the paging message, the mobile terminal transmitting a SABM frame containing content of a Layer-3 signaling to a base station through a Um interface to respond to the paging message;
Step 303, the base station transmitting the SABM frame received in step 302 to a BSC in an Establishment Indication signaling in signaling time slots via an Abis interface;
Step 304, the BSC analyzing the signaling received in step 303 to compose a complete Layer-3 message containing a paging response, and filling an extension information element part of the complete Layer-3 message with voice codec capability of the cell in the BSC based on wireless cell information in the signaling, then transmitting the extended complete Layer-3 message to the MSCServer;

An extension information element part of the complete Layer-3 message is filled with the voice codec capability of the cell in the BSC. The information element's name is BSS Preferred Codec List which is shown in the last line of table 1, and the information element is used to represent voice codec capability of a BSS wireless system; the method for representing the capability is as shown in Table 2, including Preferred Codec list element Identifier, supported voice Codec numbers, voice Codec 1, voice Codec 2, voice Codec n; the BSC performs sequencing of voice codec capabilities according to state of its own wireless resources, the voice codec ranking first is the one with the highest priority, and the voice codec ranking second is the one with less high priority, and so forth.

Step 305, after receiving the extended complete Layer-3 information sent in step 304, the MSCServer obtaining a voice codec capability list of the current wireless cell by analyzing BSS Preferred Codec List in the message; the MSCServer analyzing the list in combination with the state of voice codec resources of TC of the MGW to obtain common voice codec types that are supported by both of the current wireless cell and the TC of the MGW, and then transmitting voice codec of those types as assigned types to the BSC in the subsequent Assignment Request message through the A interface, thus achieving the purpose of avoiding as much as possible the case that a core network assigns a voice version which the wireless network is unable to provide.

Therefore, the protection scope of the present invention should be defined by the claims.

### Industrial Applicability

The present invention provides a method for negotiating codec between a wireless network and a core network in a mobile communication system, which enables a mobile switching center server to know the voice codec capability of a wireless network before a call is established, thus avoiding the situation that a core network assigns a voice version which cannot be provided by the wireless network. The present invention does not demand to change the existing interfaces and thus avoids spending in updating devices, and meanwhile, it is easy to carry out and has a high operability.

## Claims

1. A method for negotiating codec between a wireless network and a core network in a mobile communication system, **characterized by** comprising:
before a call is established, a base station controller (BSC) informing a mobile switching center server (MSCServer) of voice codec capability of a wireless cell in which a call is originated;
the MSCServer analyzing and comparing the received voice codec capability of the wireless cell with voice codec resources of a media gateway (MGW) to obtain common voice codec types supported by both of the wireless cell and the MGW, and transmitting the common voice codec types to the BSC.

2. The method of claim 1, comprising the following steps of:
a, after receiving a Set Asynchronous Balanced Mode (SABM) frame containing content of a Layer-3 signaling sent by a mobile terminal, a base station transmitting the SABM frame to the BSC in an Establishment Indication signaling;
b, after receiving the Establishment Indication signaling, the BSC analyzing the Establishment Indication signaling to compose a complete Layer-3 message, and after filling an extension information element part of the complete Layer-3 message with a voice codec capability list of a current wireless cell in the BSC, transmitting the extended complete Layer-3 message to the MSCServer;
c, after receiving the extended complete Layer-3 information, the MSCServer obtaining the voice codec capability list of the current wireless cell by analyzing the complete Layer-3 message, obtaining common voice codec types that are supported by both of the current wireless cell and the MGW by analyzing the complete Layer-3 message in combination with voice codec resources of the MGW, and transmitting the common voice codec types to the BSC.

3. The method of claim 2, before executing said step a, the method further comprising:
the mobile terminal transmitting the SABM frame containing the content of the Layer-3 signaling to the base station through a Um interface.

4. The method of claim 3, wherein the mobile terminal transmitting the SABM frame to the base station includes the following cases:
in a case that the mobile terminal serves as a calling party, the mobile terminal originates a call, and transmits a SABM frame containing the content of the Layer-3 signaling to the base station through the Um interface;
in a case that the mobile terminal serves as a called party, after receiving paging information serving as the called party, the mobile terminal transmits a SABM frame containing the content of the Layer-3 signaling to the base station through the Um interface.

5. The method of claim 2, wherein in said step a, the base station transmits the Establishment Indication signaling to the BSC in signaling time slots via an Abis interface.

6. The method of claim 2, wherein said step b comprises:
after receiving the Establishment Indication signaling, the BSC analyzing the Establishment Indication signaling to compose the complete Layer-3 message, and filling the extension information element part of the complete Layer-3 message with the voice codec capability list of the current wireless cell in the BSC based on wireless cell information in the signaling, and then transmitting the extended complete Layer-3 message to the MSCServer.

7. The method of claim 6, wherein in said step b,
the extension information element part of the complete Layer-3 message is filled with the voice codec capability list of the cell in the BSC, wherein the extension information element part comprises a BSS Preferred Codec List, and the BSS Preferred Codec List information element represents voice codec capability of a base station subsystem.

8. The method of claim 7, wherein the BSS Preferred Codec List information element comprises an information element identifier, supported voice codec numbers, and supported voice codecs; wherein the BSC performs sequencing of voice codec capabilities according to state of wireless resources of the BSC, and a voice codec with the highest priority is ranked at the top.

9. The method of claim 7, wherein in said step c,
after receiving the extended complete Layer-3 message, the MSCServer obtains the voice codec capability list of the current wireless cell by analyzing the BSS Preferred Codec List in the complete Layer-3 message; the MSCServer analyzes the voice codec capability list of the current wireless cell in combination with voice codec resources of a Transcoder of the MGW to obtain common voice codec types that are supported by both of the current wireless cell and the MGW, and then transmits the common voice codec types to the BSC.

10. The method of claim 9, wherein the MSCServer transmits an Assignment Request message to the BSC through an A interface, wherein the Assignment Request message comprises common voice codec types that are supported by both of the current wireless cell and the MGW.

## Patentansprüche

1. Verfahren zum Verhandeln von Codec zwischen einem drahtlosen Netz und einem Kernnetz in einem mobilen Kommunikationssystem, **dadurch gekennzeichnet, dass** es Folgendes umfasst:
vor dem Aufbauen eines Anrufs, Informieren eines Mobilfunkvermittlungsstellen-Servers (MSCServer) durch eine Basisstationssteuerung (BSC) über eine Sprach-Codec-Fähigkeit einer drahtlosen Zelle, in der ein Anruf veranlasst wird;
Analysieren und Vergleichen durch den MSCServer der empfangenen Sprach-Codec-Fähigkeit mit Sprach-Codec-Ressourcen eines Media Gateway (MGW) zum Erhalten von gemeinsamen Sprach-Codec-Arten, die von der drahtlosen Zelle sowie dem MGW unterstützt werden, und Übertragen der gemeinsamen Sprach-Codec-Arten an die BSC.

2. Verfahren nach Anspruch 1, folgende Schritte umfassend:
a) nach dem Empfangen eines Set Asynchronous Balance Mode- (SABM-) Frames, der Inhalt einer Schicht-3-Signalisierung enthält, Übertragen durch die Basisstation des SABM-Frames an die BSC in einer Aufbauanzeige-Signalisierung;
b) nach dem Empfangen der Aufbauanzeige-Signalisierung, Analysieren der Aufbauanzeige-Signalisierung durch die BSC zum Bilden einer vollständigen Schicht-3-Nachricht, und nach dem Füllen eines Erweiterungsinformationselementteils der Schicht 3 mit einer Sprach-Codec-Fähigkeitsliste einer derzeitigen drahtlosen Zelle in der BSC, Übertragen der erweiterten vollständigen Schicht-3-Nachricht an den MSCServer;
c) nach dem Empfangen der erweiterten vollständigen Schicht-3-Nachricht, Erhalten der Sprach-Codec-Fähigkeitsliste der derzeitigen drahtlosen Zelle durch den MSCServer durch Analysieren der vollständigen Schicht-3-Nachricht, Erhalten von gemeinsamen Sprach-Codec-Arten, die von der derzeitigen drahtlosen Zelle sowie dem MGW unterstützt werden, durch Analysieren der vollständigen Schicht-3-Nachricht in Kombination mit Sprach-Codec-Ressourcen des MGW und Übertragen der gemeinsamen Sprach-Codec-Arten an die BSC.

3. Verfahren nach Anspruch 2, vor dem Ausführen von Schritt a), das Verfahren ferner umfassend:
Übertragen des SABM-Frames, der den Inhalt der Schicht-3-Signalisierung enthält, durch das mobile Endgerät an die Basisstation über eine UM-Schnittstelle.

4. Verfahren nach Anspruch 3, wobei das mobile Endgerät, das den SABM-Frame überträgt, die folgenden Fälle beinhaltet:
in einem Fall, in dem das mobile Endgerät als anrufende Partei dient, baut das mobile Endgerät einen Anruf auf und überträgt einen SABM-Frame, der den Inhalt der Schicht-3-Signalisierung enthält, an die Basisstation über die Um-Schnittstelle;
in einem Fall, in dem das mobile Endgerät als angerufene Partei dient, überträgt das mobile Endgerät nach dem Empfangen von Paging-Information, die als die angerufene Partei dient, einen SABM-Frame, der den Inhalt der Schicht-3-Signalisierung enthält, an die Basisstation über die Um-Schnittstelle.

5. Verfahren nach Anspruch 2, wobei im Schritt a) die Basisstation die Aufbauanzeige-Signalisierung an die BSC in Signalisierungszeitschlitzen über eine Abis-Schnittstelle überträgt.

6. Verfahren nach Anspruch 2, wobei Schritt b) Folgendes umfasst:
nach dem Empfangen der Aufbauanzeige-Signalisierung, Analysieren der Aufbauanzeige-Signalisierung durch die BSC zum Bilden der vollständigen Schicht-3-Nachricht und Füllen des Erweiterungsinformationselementteils der Schicht 3 mit der Sprach-Codec-Fähigkeitsliste der derzeitigen drahtlosen Zelle in der BSC auf Grundlage von drahtloser Zelleninformation in der Signalisierung, und dann Übertragen der erweiterten vollständigen Schicht-3-Nachricht an den MSCServer.

7. Verfahren nach Anspruch 6, wobei im Schritt b)
das Erweiterungsinformationselementteil der vollständigen Schicht-3-Nachricht mit der Sprach-Codec-Fähigkeitsliste der Zelle in der BSC gefüllt wird, wobei das Erweiterungsinformationselementteil eine BSS Preferred Codec List umfasst, und das Informationselement der BSS Preferred Codec List Sprach-Codec-Fähigkeit eines Basisstationsuntersystems darstellt.

8. Verfahren nach Anspruch 7, wobei das Information der BSS Preferred Codec List eine Informationselement-ID, unterstützte Sprach-Codec-Nummern und unterstützte Sprach-Codecs umfasst; wobei die BSC Sequentialisieren von Sprach-Codec-Fähigkeiten gemäß einem Zustand von drahtlosen Ressourcen der BSC ausführt und ein Sprach-Codec mit der höchsten Priorität an erster Stelle steht.

9. Verfahren nach Anspruch 7, wobei im Schritt c)
nach dem Empfangen der erweiterten vollständigen Schicht-3-Nachricht, der MSCServer die Sprach-Codec-Fähigkeitsliste der derzeitigen drahtlosen Zelle durch Analysieren der BSS Preferred Codec List in der vollständigen Schicht-3-Nachricht erhält; der MSCServer die Sprach-Codec-Fähigkeitsliste der derzeitigen drahtlosen Zelle in Kombination mit Sprach-Codec-Ressourcen eines Transcoders des MGW zum Erhalten von gemeinsamen Sprach-Codec-Arten, die von der derzeitigen drahtlosen Zelle sowie dem MGW unterstützt werden, analysiert und dann die gemeinsamen Sprach-Codec-Arten an die BSC überträgt.

10. Verfahren nach Anspruch 9, eine Zuordnungsanfrage-Nachricht über eine A-Schnittstelle an die BSC überträgt, wobei die Zuordnungsanfrage-Nachricht gemeinsame Sprach-Codec-Arten umfasst, die von der derzeitigen drahtlosen Zelle sowie dem MGW unterstützt werden.

## Revendications

1. Procédé permettant de négocier un codec entre un réseau sans fil et un réseau d'infrastructure dans un système de communication mobile, **caractérisé en ce qu'**il comprend :
avant que l'appel soit établi, un contrôleur de station de base (BSC) informant un serveur de centre de commutation de service mobile (MSCServer) de la capacité de codec vocal d'une cellule sans fil dans laquelle un appel est émis ;
le MSCServer analysant et comparant la capacité de codec vocal reçu de la cellule sans fil avec des ressources de codecs vocaux d'une passerelle de média (MGW) afin d'obtenir des types de codecs vocaux communs supportés à la fois par la cellule sans fil et la MGW, et transmettant les types de codecs vocaux communs au BSC.

2. Procédé de la revendication 1, comprenant les étapes suivantes consistant à :
a, après la réception d'une trame de mode équilibré asynchrone établi (SABM) contenant un contenu de signalisation de couche-3 envoyée par un terminal mobile, transmettre, par une station de base, la trame SABM au BSC dans une signalisation d'Indication d'Etablissement ;
b, après la réception de la signalisation d'Indication d'Etablissement, analyser, par le BSC, la signalisation d'Indication d'Etablissement pour composer un message de couche-3 complète, et après le remplissage d'une partie d'élément d'informations d'extension du message de couche-3 complète avec une liste de capacités de codecs vocaux d'une cellule sans fil actuelle dans le BSC, transmettre le message étendu de couche-3 complète au MSCServer ;
c, après la réception d'informations étendues de couche-3 complète, obtenir, par le MSCServer, la liste de capacités de codecs vocaux de la cellule sans fil actuelle en analysant le message de couche-3 complète, obtenir des types de codecs vocaux communs qui sont supportés à la fois par la cellule sans fil actuelle et la MGW en analysant le message de couche-3 complète en association avec les ressources de codecs vocaux de la MGW, et transmettre des types de codecs vocaux communs au BSC.

3. Procédé de la revendication 2, avant l'exécution de ladite étape a, le procédé comprenant en outre le fait de :
transmettre, par le terminal mobile, la trame SABM contenant le contenu de la signalisation de couche-3 à la station de base à travers une interface Um.

4. Procédé de la revendication 3, dans lequel le fait de transmettre, par le terminal mobile, la trame SABM à la station de base comporte les cas suivantes :
dans un cas où le terminal mobile sert d'appelant, le terminal mobile émet un appel, et transmet une trame SABM contenant le contenu de la signalisation de couche-3 à la station de base à travers l'interface Um ;
dans un cas où le terminal mobile sert d'appelé, après la réception d'informations de radiomessagerie servant d'appelé, le terminal mobile transmet une trame SABM contenant le contenu de la signalisation de couche-3 à la station de base à travers l'interface Um.

5. Procédé de la revendication 2, dans lequel dans ladite étape a, la station de base transmet la signalisation d'Indication d'Etablissement au BSC dans des créneaux temporels de signalisation via une interface A bis.

6. Procédé de la revendication 2, dans lequel ladite étape b comprend le fait de :
après la réception de la signalisation d'Indication d'Etablissement, analyser, par le BSC, la signalisation d'Indication d'Etablissement pour composer le message de couche-3 complète, et remplir la partie d'élément d'informations d'extension du message de couche-3 complète avec la liste de capacités de codecs vocaux de la cellule sans fil actuelle dans le BSC sur la base d'informations de cellule sans fil dans la signalisation, et ensuite transmettre le message étendu de couche-3 complète au MSCserver.

7. Procédé de la revendication 6, dans lequel, dans ladite étape b,
la partie d'élément d'informations d'extension du message de couche-3 complète est remplie avec la liste de capacités de codecs vocaux de la cellule dans le BSC, où la partie d'élément d'informations d'extension comprend une Liste de Codecs Préférés BSS, et l'élément d'informations de Liste de Codecs Préférés BSS représente une capacité de codec vocal d'un sous-système de station de base.

8. Procédé de la revendication 7, dans lequel l'élément d'informations de Liste de Codecs préférés BSS comprend un identifiant d'élément d'informations, des nombres de codecs vocaux supportés, et des codecs vocaux supportés ; où le BSC exécute le mise en séquence des capacités de codecs vocaux selon l'état des ressources sans fil du BSC, et un codec vocal ayant la priorité la plus élevée est classé en tête.

9. Procédé de la revendication 7, dans lequel, dans ladite étape c,
après la réception du message étendu de couche-3 complète, le MSCServer obtient la liste de capacités de codecs vocaux de la cellule sans fil actuelle en analysant la Liste de Codecs Préférés BSS dans le message de couche-3 complète ; le MSCServer analyse la liste de capacités de codecs vocaux de la cellule sans fil actuelle en association avec des ressources de codecs vocaux d'un Transcodeur de la MGW pour obtenir des types de codecs vocaux communs qui sont supportés à la fois par la cellule sans fil actuelle et la MGW, et ensuite transmet les types de codecs vocaux communs au BSC.

10. Procédé de la revendication 9, dans lequel le MSCServer transmet un message de Demande d'Attribution au BSC à travers une interface A, où le message de Demande d'Attribution comprend des types de codecs vocaux communs qui sont supportés à la fois par la cellule sans fil actuelle et la MGW.
